# EUROPEAN PATENT SPECIFICATION

(11) **EP 4 451 430 B1**
(45) Date of publication and mention of the grant of the patent: **04.11.2026**
(21) Application number: 23740358.9
(22) Date of filing: 16.01.2023
(51) Int. Cl.: H01M 10/6568, H01M 10/613, H01M 10/625, H01M 10/6556

(54) **VEHICLE BATTERY COOLER**
KÜHLER FÜR FAHRZEUGBATTERIE
REFROIDISSEUR DE BATTERIE DE VÉHICULE

(30) Priority: 17.01.2022 JP 2022005171
(43) Date of publication of application: 23.10.2024
(73) Proprietor: Japan Climate Systems Corporation, Higashihiroshima-shi, Hiroshima 739-0153 (JP)
(72) Inventor: IWANARI, Motoaki, Higashihiroshima-shi, Hiroshima 739-0153 (JP); YAMAGUCHI, Hiroshi, Higashihiroshima-shi, Hiroshima 739-0153 (JP); KUWADA, Takeki, Higashihiroshima-shi, Hiroshima 739-0153 (JP)
(74) Representative: Germain Maureau
(86) International application number: PCT/JP2023/001042
(87) International publication number: WO 2023/136350

(56) References cited:
- WO-A1-2013/171885
- WO-A1-2013/171885
- WO-A1-2020/179651
- WO-A1-2020/179651
- JP-A- H04 263 793

## Description

### TECHNICAL FIELD

The present disclosure relates to a battery cooler for cooling a battery mounted on, for example, an electric vehicle, a hybrid vehicle, or the like.

### BACKGROUND ART

For example, an electric vehicle, a hybrid vehicle, or the like is equipped with a battery for supplying electric power to a driving motor. A battery cooler may be provided because the battery generates heat at the time of charge and discharge (see, for example, Patent Document 1).

The battery cooler of Patent Document 1 is a heat exchanger comprised of a plurality of tubes between a first header and a second header. The plurality of tubes include first tubes for allowing the refrigerant to flow from the first header to the second header and second tubes for allowing the refrigerant to flow from the second header to the first header, and the sum of the areas of the surfaces of the first tubes where heat is exchanged with the battery is larger than the sum of the areas of the surfaces of the second tubes where heat is exchanged with the battery.

FIGS. 1 and 7 of Patent Document 1 show a configuration in which one battery is cooled by one heat exchanger, and FIGS. 2 and 3 of Patent Document 1 show a configuration in which two batteries are cooled by two heat exchangers.

### CITATION LIST

### PATENT DOCUMENT

Patent Document 1: Domestic Re-Publication of PCT International Application Publication No. 2020/179651

WO 2020/179651 A1 discloses a vehicle battery cooling system.

### SUMMARY OF THE INVENTION

### TECHNICAL PROBLEM

In many cases, a plurality of batteries are mounted to supply electric power to the driving motor; therefore, the number of heat exchangers required when the battery cooler of Patent Document 1 is employed is the same as the number of the batteries. Each heat exchanger is comprised of the first header, the second header, and the plurality of tubes, so that the number of components is large. If the battery cooler is configured as a combination of the plurality of heat exchangers, the battery cooler is increased in size as a whole.

An object of the present disclosure is therefore to make it possible to cool a plurality of batteries with a single heat exchanger.

### SOLUTION TO THE PROBLEM

The objects of the present invention are solved by the features of the independent claim. Preferred embodiments are given in the dependent claims 2-9.

According to this configuration, the cooling capacity of the cooling medium flowing inside the tube constituting the most upstream path is the highest among the paths. On the other hand, the cooling capacity of the cooling medium flowing inside the tube constituting the most downstream path is the lowest among the paths. The cooling capacity of the cooling medium flowing inside the tube constituting the intermediate path is intermediate between the cooling capacity of the most upstream path and the cooling capacity of the most downstream path. Accordingly, the first battery in contact with the most upstream path and the most downstream path is cooled sufficiently because the higher cooling capacity of the most upstream path compensates the lower cooling capacity of the most downstream path. The second battery is cooled sufficiently as well because the second battery is in contact with the intermediate path, the cooling capacity of which is higher than the cooling capacity of the most downstream path.

In a second aspect of the present disclosure, the most upstream path, the most downstream path, and the intermediate path are arranged in sequence in the predetermined direction, and the first header tank is provided with a bypass pipe that allows a refrigerant that has flowed through the most upstream path to bypass the most downstream path and flow into the intermediate path.

According to this configuration, the most upstream path, the most downstream path, and the intermediate path are arranged in sequence in the predetermined direction, which can make it easy to form a layout in which the most upstream path and the most downstream path are brought into contact with the first battery and the intermediate path is brought into contact with the second battery to cool both batteries.

In a third aspect of the present disclosure, all the tubes have a same shape. It is thus possible to reduce types of components constituting the battery cooler and lower costs.

In a fourth aspect of the present disclosure, the refrigerant at the refrigerant outflow part is in a superheated state.

According to this configuration, the plurality of batteries can be efficiently cooled by using the cold thermal energy of the refrigerant until the refrigerant becomes superheated. That is, the distribution of the cooling capacity can be uniform even when the degree of superheat at the refrigerant outflow part is great and no liquid refrigerant is flowing through the most downstream path, because the most downstream path is arranged next to the most upstream path having a high cooling capacity because of a great amount of the liquid refrigerant.

In a fifth aspect of the present disclosure, each of the paths is constituted by a same number of the tubes. It is thus possible to simplify the configuration of the battery cooler. It is also possible to increase the cooling capacity since the cooling medium flows equally through all the tubes.

In a sixth aspect of the present disclosure, the second header tank is provided with a refrigerant inflow part that allows a refrigerant as the cooling medium to flow in, and a refrigerant outflow part that allows the refrigerant that has flowed in from the refrigerant inflow part and flowed through the most upstream path, the intermediate path, and the most downstream path to flow out.

According to this configuration, the bypass pipe is provided in the first header tank, and the refrigerant inflow part and the refrigerant outflow part are provided in the second header tank; therefore, the bypass pipe and the pipes connected to the refrigerant inflow part and the refrigerant outflow part are less likely to interfere with each other. The degree of freedom in setting the positions, orientations, and shapes of these pipes is thus improved.

In a seventh aspect of the present disclosure, the most upstream path and the most downstream path are each constituted by n × 1 of the tubes, and the intermediate path is constituted by n × 2 of the tubes, where n is a natural number starting from 1.

In an eighth aspect of the present disclosure, the most upstream path and the most downstream path are each constituted by n × 1 of the tubes, and the intermediate path includes both of a path constituted by n × 1 of the tubes and a path constituted by n × 2 of the tubes, where n is a natural number starting from 1.

In a ninth aspect of the present disclosure, the intermediate path includes a first intermediate path and a second intermediate path arranged in the flow direction of the cooling medium. It is thus possible to cool one battery by the first intermediate path and cool another battery by the second intermediate path. Hence, three or more batteries can be cooled.

### ADVANTAGES OF THE INVENTION

As can be seen from the foregoing description, the most upstream path and the most downstream path are arranged so as to come into contact with the first battery, and the intermediate path is arranged so as to come into contact with the second battery. A plurality of batteries separated from each other can thus be cooled by one heat exchanger. It is therefore possible to downsize the battery cooler.

### BRIEF DESCRIPTION OF THE DRAWINGS

FIG. 1 is a plan view of a structure of a battery cooler according to a first embodiment of the present invention.
FIG. 2 is a diagram showing a schematic configuration of a battery cooling system.
FIG. 3 is a plan view of a structure of a battery cooler according to a second embodiment of the present invention.
FIG. 4 is a plan view of a structure of a battery cooler according to a third embodiment of the present invention.
FIG. 5 is a plan view of a structure of a battery cooler according to a fourth embodiment of the present invention.
FIG. 6 is a plan view of a structure of a battery cooler according to a fifth embodiment of the present invention.

### DESCRIPTION OF EMBODIMENTS

Embodiments of the present invention will be described in detail below with reference to the drawings. The following description of the preferred embodiments is merely illustrative in nature, and is not intended to limit the present invention, its application, or its use.

### (First Embodiment)

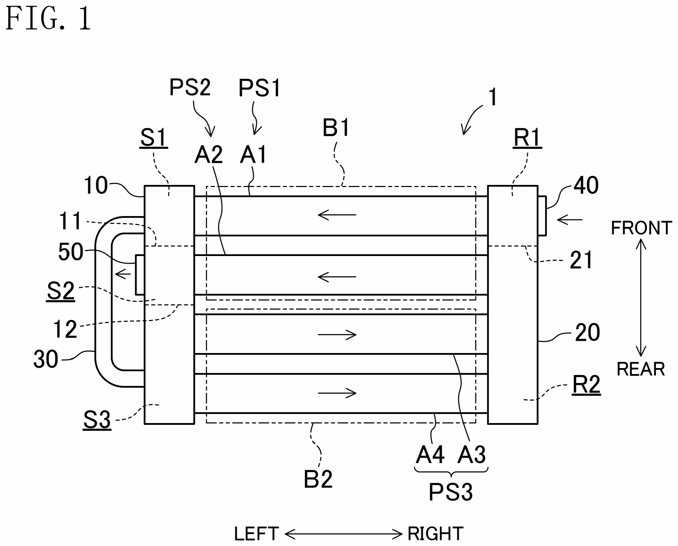

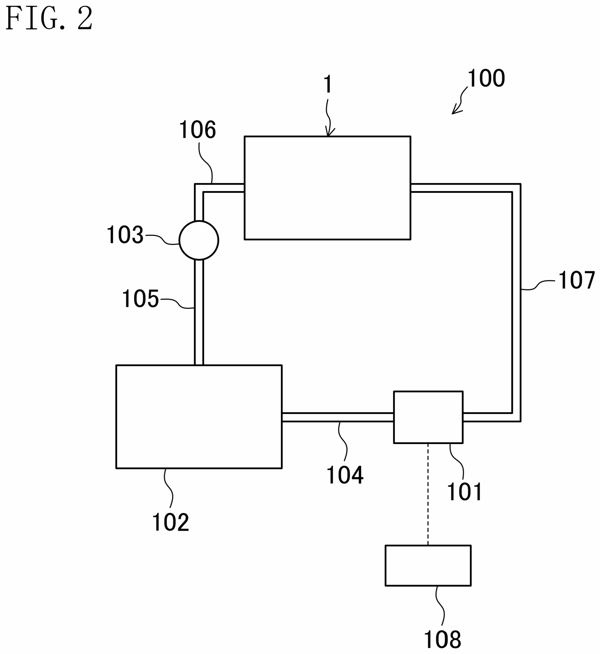

FIG. 1 is a diagram showing a battery cooler 1 according to a first embodiment of the present invention. As shown in FIG. 2, the battery cooler 1 is a single heat exchanger and constitutes a part of a battery cooling system 100. The battery cooling system 100 includes, in addition to the battery cooler 1, a compressor 101 configured to compress a refrigerant used as a cooling medium, a condenser 102 configured to condense the refrigerant, and a decompression valve 103 configured to decompress the refrigerant. The high-temperature, high-pressure refrigerant discharged from the compressor 101 flows through a first refrigerant pipe 104 and flows into the condenser 102. The refrigerant condensed by the condenser 102 flows through a second refrigerant pipe 105 and flows into the decompression valve 103, by which the refrigerant is decompressed. The refrigerant decompressed by the decompression valve 103 flows through a third refrigerant pipe 106 and flows into the battery cooler 1 in a gasliquid two-phase state. The battery cooler 1 is a so-called evaporator. The refrigerant that has flowed into the battery cooler 1 dissipates heat while flowing through the battery cooler 1 and turns into a gas, and then flows through the fourth refrigerant pipe 107 and is sucked into the compressor 101. Thus, the battery cooling system 100 is configured as a refrigeration cycle device. The first to fourth refrigerant pipes 104 to 107, as well, are the members that constitute a part of the battery cooling system 100.

The compressor 101 is controlled by a controller 108. The controller 108 detects, for example, the charge/discharge state and temperatures of batteries B1 and B2 (shown in FIG. 1) and activates the compressor 101 when the batteries B1 and B2 need to be cooled. The controller 108 stops the compressor 101 when cooling of the batteries B1 and B2 is no longer needed. The compressor 101 may be electrically driven or may be driven by an engine (not shown) mounted on a hybrid vehicle.

As shown in FIG. 1, the battery cooler 1 is for cooling a first battery B1 and a second battery B2 shown by imaginary lines. The first battery B1 and the second battery B2 are used to supply electric power to a driving motor (not shown) mounted, for example, on an electric vehicle, a hybrid vehicle, or the like. Accordingly, the battery cooler 1 is also mounted on an electric vehicle, a hybrid vehicle, or the like. The hybrid vehicle may be a plug-in hybrid vehicle that can be charged from a commercial power supply or the like. Arrows in FIG. 1 indicate the flow direction of the refrigerant.

In the present embodiment, a case will be described in which two batteries, i.e., the first battery B1 and the second battery B2, are mounted, and the first battery B1 is placed forward and the second battery B2 is placed rearward. However, the number of batteries is not limited to two. A plurality of cells (not shown) are housed in each of the first battery B1 and the second battery B2. The first battery B1 and the second battery B2 are formed in a shape elongated in the left-right direction, and are spaced apart and separated from each other in the front-rear direction. The first battery B1 and the second battery B2 are the same in size and shape, but may be different in size and shape from each other. The first battery B1 and the second battery B2 may change places in the front-rear direction, or may be arranged side by side in the left-right direction.

The first battery B1, the second battery B2, and the battery cooler 1 are housed in a battery case (not shown). In the description of the embodiments, the front-rear direction and the left-right direction are defined as illustrated in the drawings, but these are defined only for convenience of description, and are not intended to limit the directions in actual use and during manufacturing. The batteries may be mounted on the vehicle such that the front-rear direction is the left-right direction of the vehicle.

The battery cooler 1 includes first to fourth tubes A1 to A4, a left header tank 10, a right header tank 20, and a bypass pipe 30. The first to fourth tubes A1 to A4 are flat plateshaped tubes extending in the left-right direction, made of, for example, an aluminum alloy, and arranged at intervals in the front-rear direction. The front-rear direction is a predetermined direction, and a direction orthogonal to the predetermined direction in a plan view is the left-right direction. The first to fourth tubes A1 to A4 are all the same, that is, all of them have the same shape. The same shape means that the first to fourth tubes A1 to A4 have the same length dimension (dimension in the left-right direction), the same width dimension (dimension in the front-rear direction), and the same thickness. The first to fourth tubes A1 to A4 have the same wall thickness and the same cross-sectional area.

The first to fourth tubes A1 to A4 may be different from each other. The first to fourth tubes A1 to A4 may extend in the front-rear direction. In this case, the battery cooler 1 includes a front header tank and a rear header tank, and the predetermined direction in which the first to fourth tubes A1 to A4 are arranged is the left-right direction.

The first to fourth tubes A1 to A4 are arranged in parallel to each other. The first tube A1 is the nearest to the front, and the fourth tube A4 is the nearest to the rear. The second tube A2 is arranged behind the first tube A1, and the third tube A3 is arranged between the second tube A2 and the fourth tube A4. That is, from front to rear, the first tube A1, the second tube A2, the third tube A3, and the fourth tube A4 are arranged in this order. The distance between the first to fourth tubes A1 to A4 in the front-rear direction may be the same, or the first tube A1 and the second tube A2 may be close to each other, or the third tube A3 and the fourth tube A4 may be close to each other. The heights of the first to fourth tubes A1 to A4 in the battery case are set to be the same. The upper surfaces of the tubes A1 to A4 are substantially flat.

The dimension of the first tube A1 and the second tube A2 in the front-rear direction is set to be shorter than the dimension of the first battery B1 in the front-rear direction. The single first battery B1 is arranged so that the lower surface of the first battery B1 is in contact with the upper surfaces of the first tube A1 and the second tube A2. Accordingly, the cold thermal energy of the refrigerant flowing through the first tube A1 and the second tube A2 can be efficiently transmitted to the first battery B1, making it possible to cool the first battery B1 by the cold thermal energy of the refrigerant. A component that promotes heat conduction may be interposed between the first and second tubes A1 and A2 and the first battery B1.

The dimension of the third tube A3 and the fourth tube A4 in the front-rear direction is set to be shorter than the dimension of the second battery B2 in the front-rear direction. The single second battery B2 is arranged so that the lower surface of the second battery B2 is in contact with the upper surfaces of the third tube A3 and the fourth tube A4. It is thus possible to cool the second battery B2 by the refrigerant flowing through the third tube A3 and the fourth tube A4. A component that promotes heat conduction may be interposed between the third and fourth tubes A3 and A4 and the second battery B2.

The number of tubes may be changed according to the number of batteries. For example, one tube or a plurality of tubes may be added when the number of batteries is increased by one, and one tube or a plurality of tubes may be reduced when the number of batteries is reduced by one. Further, one tube may be arranged under one battery, or three or more tubes may be arranged under one battery.

The left header tank (first header tank) 10 is positioned to the left of the first battery B1 and the second battery B2, and extends in the front-rear direction in which the first to fourth tubes A1 to A4 are arranged. Left end portions (one end portions) of the first to fourth tubes A1 to A4 are connected to the left header tank 10. Both front and rear end portions of the left header tank 10 are closed.

The left header tank 10 is provided with a first left partition plate 11 and a second left partition plate 12. The first left partition plate 11 and the second left partition plate 12 are brazed to the left header tank 10. The first left partition plate 11 is located between the first tube A1 and the second tube A2. The second left partition plate 12 is located between the second tube A2 and the third tube A3. Thus, the left header tank 10 has therein a left-side first space S1 in front of the first left partition plate 11, a left-side second space S2 between the first left partition plate 11 and the second left partition plate 12, and a left-side third space S3 behind the second left partition plate 12.

The right header tank (second header tank) 20 is positioned to the right of the first battery B1 and the second battery B2, and extends in the front-rear direction substantially parallel to the left header tank 10. Right end portions (other end portions) of the first to fourth tubes A1 to A4 are connected to the right header tank 20. Both front and rear end portions of the right header tank 20 are closed.

The right header tank 20 is provided with a first right partition plate 21. The first right partition plate 21 is brazed to the right header tank 20. The first right partition plate 21 is located between the first tube 11 and the second tube 12. Thus, the right header tank 20 has therein a right-side first space R1 in front of the first right partition plate 21, and a right-side second space R2 behind the first right partition plate 21.

The right header tank 20 is provided with a refrigerant inflow part 40 that allows the refrigerant to flow in. The refrigerant inflow part 40 is provided so as to correspond to the right-side first space R1. The refrigerant inflow part 40 may be configured as a refrigerant inflow port formed in the right header tank 20, or may be configured as an inlet-side connection member, a connection block, or the like formed of a block-shaped member attached to the right header tank 20. A downstream end of the third refrigerant pipe 106 shown in FIG. 2 is connected to the refrigerant inflow part 40. The third refrigerant pipe 106 communicates with the right-side first space R1 via the refrigerant inflow part 40; therefore, the refrigerant decompressed by the decompression valve 103 flows into the right-side first space R1.

The left header tank 10 is provided with a refrigerant outflow part 50 that allows the refrigerant that has flowed through the first to fourth tubes A1 to A4 to flow out. The refrigerant outflow part 50 may be configured as a refrigerant outflow port formed in the left header tank 10, or may be configured as an outlet-side connection member, a connection block, or the like formed of a block-shaped member attached to the left header tank 10. An upstream end of the fourth refrigerant pipe 107 shown in FIG. 2 is connected to the refrigerant outflow part 50. The refrigerant outflow part 50 corresponds to the left-side second space S2. The fourth refrigerant pipe 107 communicates with the left-side second space S2 via the refrigerant outflow part 50.

### (Path of Heat Exchanger)

As described above, the left header tank 10 is provided with the first left partition plate 11 and the second left partition plate 12, which partition the inside of the left header tank 10 into the left-side first space S1, the left-side second space S2, and the left-side third space S3. The right header tank 20 is provided with the first right partition plate 21, which partitions the inside of the right header tank 20 into the right-side first space R1 and the right-side second space R2. The inside of the left header tank 10 and the inside of the right header tank 20 are partitioned into the spaces S1 to S3 and the spaces R1 and R2, respectively, so that the first to fourth tubes A1 to A4 are divided into three paths PS1, PS2, and PS3 arranged in the front-rear direction.

Specifically, the first path PS1 is constituted by the first tube A1 communicating with the left-side first space S1 and the right-side first space R1. The second path PS2 is constituted by the second tube A2 communicating with the left-side second space S2 and the right-side second space R2. The third path PS3 is constituted by the third tube A3 and the fourth tube A4 communicating with the left-side third space S3 and the right-side second space R2. The first path PS1 is the nearest to the front, and the third path PS3 is the nearest to the rear. The second path PS2 is located between the first path PS1 and the third path PS3. The first path PS1 and the second path PS2 are each constituted by one tube (odd number), but the third path PS3 is constituted by two tubes (even number). The third path PS3 may be constituted by three or more tubes.

Since the decompressed refrigerant flows into the right-side first space R1, the first path PS1 formed by the first tube A1 is the most upstream path located at a most upstream position in the refrigerant flow direction. On the other hand, since the refrigerant flows out from the left-side second space S2, the second path PS2 formed by the second tube A2 is the most downstream path located at a most downstream position in the refrigerant flow direction. An intermediate path between the first path PS1 as the most upstream path and the second path PS2 as the most downstream path in the refrigerant flow direction is the third path PS3 constituted by the third tube A3 and the fourth tube A4.

Thus, the first path PS1 as the most upstream path and the second path PS2 as the most downstream path are arranged next to each other in the horizontal direction and are in contact with the first battery B1, and the third path PS3 as the intermediate path is in contact with the second battery B2. In this embodiment, the first path PS1 as the most upstream path, the second path PS2 as the most downstream path, and the third path PS3 as the intermediate path are arranged so that they are arranged in sequence in the front-rear direction, and the arrangement of the first path PS1, the second path PS2, and the third path PS3 is not in the order in which the refrigerant flows.

In order to form the above-described flow of the refrigerant in the first path PS1, the second path PS2, and the third path PS3, the bypass pipe 30 is provided for the left header tank 30 in the present embodiment. An upstream end (one end portion) of the bypass pipe 30 is connected to the left-side first space S1 of the left header tank 30, and a downstream end (other end portion) of the bypass pipe 30 is connected to the left-side third space S3 of the left header tank 30. It is thus possible to make the refrigerant that has flowed into the left-side first space S1 bypass the second path PS2 and flow into the left-side third space S3.

### (Effects and Advantages)

The battery cooling system 100 according to the present embodiment is operated such that the refrigerant at the refrigerant outflow part 50 of the battery cooler 1 is in a gaseous form and in a superheated state. The refrigerant decompressed by the decompression valve 103 flows into the right-side first space R1 via the refrigerant inflow part 40, and then flows into the first tube A1 constituting the first path PS1, flows inside the first tube A1 to the left, and flows into the left-side first space S1. The refrigerant that has flowed into the left-side first space S1 flows into the left-side third space S3 via the bypass pipe 30, and then flows into the third tube A3 and the fourth tube A4 which constitute the third path PS3, flows inside the tubes A3 and A4 to the right, and flows into the right-side second space R2. The refrigerant that has flowed into the right-side second space R2 flows into the second tube A2 constituting the second path PS2, flows inside the second tube A2 to the left, and flows into the left-side second space S2. The refrigerant that has flowed into the left-side second space S2 flows out from the refrigerant outflow part 50.

The cooling capacity of the refrigerant flowing inside the first tube A1 constituting the first path PS1 as the most upstream path is the highest among the three paths PS1, PS2, and PS3. The cooling capacity of the refrigerant flowing inside the second tube A2 constituting the second path PS2 as the most downstream path is the lowest among the three paths PS1, PS2, and PS3. The cooling capacity of the refrigerant flowing inside the tubes A3 and A4 which constitute the third path PS3 as the intermediate path is intermediate between the cooling capacity of the first path PS1 and the cooling capacity of the second path PS2. Accordingly, the first battery B1 in contact with the first path PS1 and the second path PS2 is cooled sufficiently because the higher cooling capacity of the first path PS1 compensates the lower cooling capacity of the second path PS2. The second battery B2 is cooled sufficiently as well because the second battery B2 is in contact with the third path PS3, the cooling capacity of which is higher than the cooling capacity of the second path PS2. It is thus possible to cool the plurality of batteries B1 and B2 by one heat exchanger.

### (Second Embodiment)

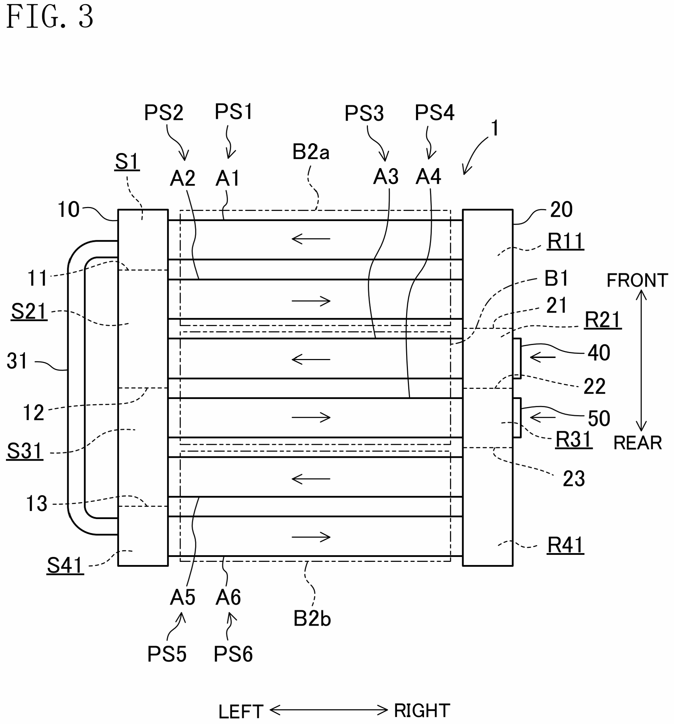

FIG. 3 is a diagram showing a battery cooler 1 according to a second embodiment of the present invention. The battery cooler 1 of the second embodiment differs from the battery cooler 1 of the first embodiment in that it has six tubes (first to sixth tubes A1 to A6) to make it possible to cool batteries B1, B2a, and B2b. In the following description, the same parts as those in the first embodiment are denoted by the same reference numerals, and the description thereof will be omitted. Different parts will be described in detail. Each of the batteries B2a and B2b is the second battery.

A fifth tube A5 is arranged behind the fourth tube A4, and a sixth tube A6 is arranged behind the fifth tube A5. The fifth tube A5 and the sixth tube A6 are the same as the first tube A1 and the other tubes.

The left header tank 10 is provided with a first left partition plate 11, a second left partition plate 12, and a third left partition plate 13. The first left partition plate 11 is located between the first tube A1 and the second tube A2. The second left partition plate 12 is located between the third tube A3 and the fourth tube A4. The third left partition plate 13 is located between the fifth tube A5 and the sixth tube A6. Thus, the left header tank 10 has therein a left-side first space S11 in front of the first left partition plate 11, a left-side second space S21 between the first left partition plate 11 and the second left partition plate 12, a left-side third space S31 between the second left partition plate 12 and the third left partition plate 13, and a left-side fourth space S41 behind the third left partition plate 13.

The right header tank 20 is provided with a first right partition plate 21, a second right partition plate 22, and a third right partition plate 23. The first right partition plate 21 is located between the second tube A2 and the third tube A3. The second right partition plate 22 is located between the third tube A3 and the fourth tube A4. The third right partition plate 23 is located between the fourth tube A4 and the fifth tube A5. Thus, the right header tank 20 has therein a right-side first space R11 in front of the first right partition plate 21, a right-side second space R21 between the first right partition plate 21 and the second right partition plate 22, a right-side third space R31 between the second right partition plate 22 and the third right partition plate 23, and a right-side fourth space R41 behind the third right partition plate 23.

The right header tank 20 is provided with a refrigerant inflow part 40 and a refrigerant outflow part 50. The refrigerant inflow part 40 is provided so as to correspond to the right-side second space R21. Thus, the refrigerant decompressed by the decompression valve 103 flows into the right-side second space R2. The refrigerant outflow part 50 is provided so as to correspond to the right-side third space R31. Accordingly, the refrigerant in the right-side third space R31 flows out from the refrigerant outflow part 50.

First to sixth paths PS1 to PS6 are formed in the second embodiment. The first path PS1 is constituted by the first tube A1. The second path PS2 is constituted by the second tube A2. The third path PS3 is constituted by the third tube A3. The fourth path PS4 is constituted by the fourth tube A4. The fifth path PS5 is constituted by the fifth tube A5. The sixth path PS6 is constituted by the sixth tube A6. That is, all the paths PS1 to PS6 are each constituted by one tube, that is, the tubes A1 to A6, respectively.

The most upstream path in the flow direction of the refrigerant is the third path PS3. The most downstream path in the refrigerant flow direction is the fourth path PS4. The third path PS3 and the fourth path PS4 are arranged so as to be next to each other and come into contact with the first battery B1.

The first path PS1, the second path PS2, the fifth path PS5, and the sixth path PS6 are intermediate paths between the most upstream path and the most downstream path in the flow direction of the refrigerant. The first path PS1 and the second path PS2 are arranged so as to be next to each other and come into contact with the second battery B2a. The fifth path PS5 and the sixth path PS6 are arranged so as to be next to each other and come into contact with the second battery B2b. The first and second paths PS1 and PS2 and the fifth and sixth paths PS5 and PS6 constitute a first intermediate path and a second intermediate path, respectively, which are arranged in the flow direction of the refrigerant.

In order to form the above-described flow of the refrigerant, a bypass pipe 31 is provided for the left header tank 30. An upstream end (one end portion) of the bypass pipe 31 is connected to the left-side first space S11 of the left header tank 30, and a downstream end (other end portion) of the bypass pipe 30 is connected to the left-side fourth space S41 of the left header tank 30. It is thus possible to make the refrigerant that has flowed into the left-side first space S11 bypass the second path PS2 and flow into the left-side fourth space S41.

According to the second embodiment, the three batteries B1, B2a, and B2b can be cooled by the six tubes A1 to A6.

### (Third Embodiment)

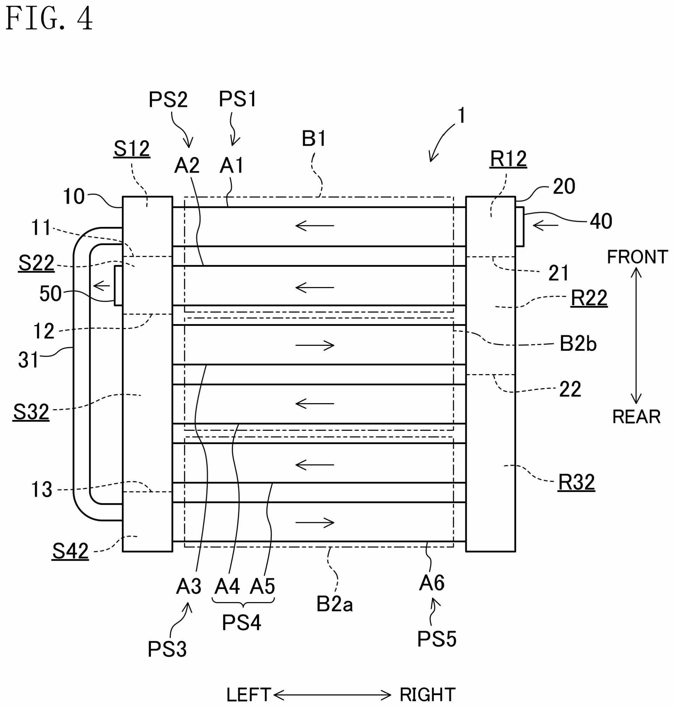

FIG. 4 is a diagram showing a battery cooler 1 according to a third embodiment of the present invention. The battery cooler 1 of the third embodiment differs from that of the second embodiment in that the number of paths is five and that the refrigerant outflow part 50 is provided in the left header tank 10. In the following description, parts different from the second embodiment will be described in detail.

That is, the second left partition plate 12 is located between the second tube A2 and the third tube A3. Thus, the left header tank 10 has therein a left-side first space S12 in front of the first left partition plate 11, a left-side second space S22 between the first left partition plate 11 and the second left partition plate 12, a left-side third space S32 between the second left partition plate 12 and the third left partition plate 13, and a left-side fourth space S42 behind the third left partition plate 13.

The first right partition plate 21 is located between the first tube A1 and the second tube A2. The third right partition plate is omitted. Thus, the right header tank 20 has therein a right-side first space R12 in front of the first right partition plate 21, a right-side second space R22 between the first right partition plate 21 and the second right partition plate 22, and a right-side third space R32 behind the second right partition plate 22.

The refrigerant inflow part 40 is provided so as to correspond to the right-side first space R12 of the right header tank 20. Thus, the refrigerant decompressed by the decompression valve 103 flows into the right-side first space R12. The refrigerant outflow part 50 is provided so as to correspond to the left-side second space S22 of the left header tank 10. Accordingly, the refrigerant in the left-side second space S22 flows out from the refrigerant outflow part 50.

First to fifth paths PS1 to PS5 are formed in the third embodiment. The first path PS1 is constituted by the first tube A1. The second path PS2 is constituted by the second tube A2. The third path PS3 is constituted by the third tube A3. The fourth path PS4 is constituted by the fourth tube A4 and the fifth tube A5. The fifth path PS5 is constituted by the sixth tube A6.

The most upstream path in the flow direction of the refrigerant is the first path PS1. The most downstream path in the flow direction of the refrigerant is the second path PS2. The first path PS1 and the second path PS2 are arranged so as to be next to each other and come into contact with the first battery B1.

The third path PS3, the fourth path PS4, and the fifth path PS5 are intermediate paths between the most upstream path and the most downstream path in the flow direction of the refrigerant. The third path PS3 and the fourth path PS2 are arranged so as to be next to each other and come into contact with the second battery B2b. The fourth path PS4 and the fifth path PS5 are arranged so as to be next to each other and come into contact with the second battery B2a. The third path PS3, the fourth path PS4, and the fifth path PS5 constitute a plurality of intermediate paths arranged in the flow direction of the refrigerant.

In order to form the above-described flow of the refrigerant, a bypass pipe 31 is provided for the left header tank 30. An upstream end (one end portion) of the bypass pipe 31 is connected to the left-side first space S12 of the left header tank 30, and a downstream end (other end portion) of the bypass pipe 30 is connected to the left-side fourth space S42 of the left header tank 30. It is thus possible to make the refrigerant that has flowed into the left-side first space S12 bypass the second path PS2, the third path PS3, and the fourth path PS4 and flow into the left-side fourth space S42.

According to the third embodiment, the three batteries B1, B2a, and B2b can be cooled by the five paths PS1 to PS5.

### (Fourth Embodiment)

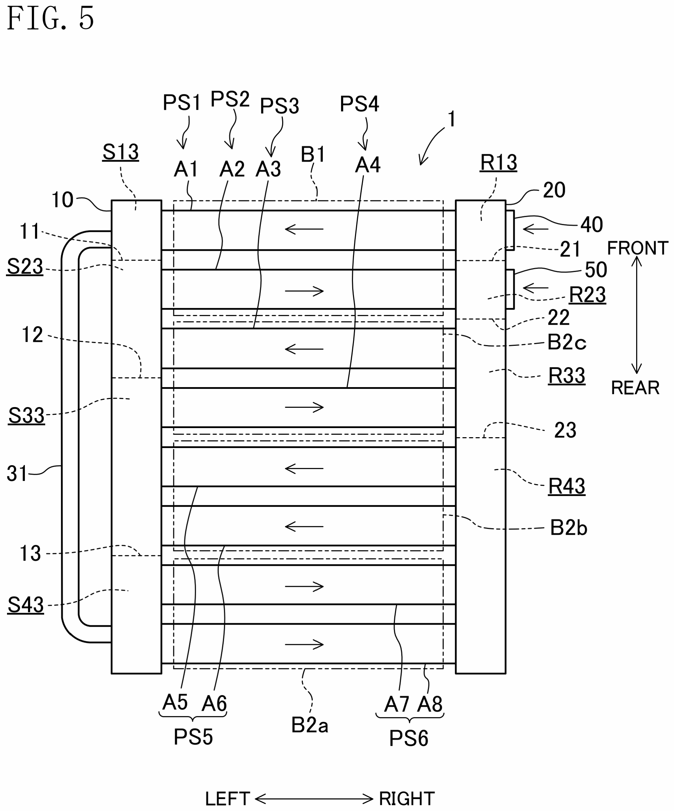

FIG. 5 is a diagram showing a battery cooler 1 according to a fourth embodiment of the present invention. The battery cooler 1 of the fourth embodiment differs from the battery cooler 1 of the first embodiment in that it has eight tubes (first to eighth tubes A1 to A8) to make it possible to cool batteries B1, B2a, B2b, and B2c. In the following description, the same parts as those in the first embodiment are denoted by the same reference numerals, and the description thereof will be omitted. Different parts will be described in detail. Each of the batteries B2a, B2b, and B2c is the second battery.

A fifth tube A5 is arranged behind the fourth tube A4, and a sixth tube A6 is arranged behind the fifth tube A5. A seventh tube A7 is arranged behind the sixth tube A6, and an eighth tube A8 is arranged behind the seventh tube A7. The fifth to eighth tubes A5 to A8 are the same as the first tube A1 and the other tubes.

The left header tank 10 is provided with a first left partition plate 11, a second left partition plate 12, and a third left partition plate 13. The first left partition plate 11 is located between the first tube A1 and the second tube A2. The second left partition plate 12 is located between the third tube A3 and the fourth tube A4. The third left partition plate 13 is located between the sixth tube A6 and the seventh tube A7. Thus, the left header tank 10 has therein a left-side first space S13 in front of the first left partition plate 11, a left-side second space S23 between the first left partition plate 11 and the second left partition plate 12, a left-side third space S33 between the second left partition plate 12 and the third left partition plate 13, and a left-side fourth space S43 behind the third left partition plate 13.

The right header tank 20 is provided with a first right partition plate 21, a second right partition plate 22, and a third right partition plate 23. The first right partition plate 21 is located between the first tube A1 and the second tube A2. The second right partition plate 22 is located between the second tube A2 and the third tube A3. The third right partition plate 23 is located between the fourth tube A4 and the fifth tube A5. Thus, the right header tank 20 has therein a right-side first space R13 in front of the first right partition plate 21, a right-side second space R23 between the first right partition plate 21 and the second right partition plate 22, a right-side third space R33 between the second right partition plate 22 and the third right partition plate 23, and a right-side fourth space R43 behind the third right partition plate 23.

The right header tank 20 is provided with a refrigerant inflow part 40 and a refrigerant outflow part 50. The refrigerant inflow part 40 is provided so as to correspond to the right-side first space R13. Thus, the refrigerant decompressed by the decompression valve 103 flows into the right-side first space R13. The refrigerant outflow part 50 is provided so as to correspond to the right-side second space R23. Accordingly, the refrigerant in the right-side second space R23 flows out from the refrigerant outflow part 50.

First to sixth paths PS1 to PS6 are formed in the fourth embodiment. The first path PS1 is constituted by the first tube A1. The second path PS2 is constituted by the second tube A2. The third path PS3 is constituted by the third tube A3. The fourth path PS4 is constituted by the fourth tube A4. The fifth path PS5 is constituted by the fifth tube A5 and the sixth tube A6. The sixth path PS6 is constituted by the seventh tube A7 and the eighth tube A8.

The most upstream path in the flow direction of the refrigerant is the first path PS1. The most downstream path in the flow direction of the refrigerant is the second path PS2. The first path PS1 and the second path PS2 are arranged so as to be next to each other and come into contact with the first battery B1.

The third path PS3, the fourth path PS4, the fifth path PS5, and the sixth path PS6 are intermediate paths between the most upstream path and the most downstream path in the flow direction of the refrigerant. The third path PS3 and the fourth path PS4 are arranged so as to be next to each other and come into contact with the second battery B2c. The fifth path PS5 is arranged so as to come into contact with the second battery B2b. The sixth path PS6 is arranged so as to come into contact with the second battery B2a. The third path PS3, the fourth path PS4, the fifth path PS5, and the sixth path PS6 constitute a plurality of intermediate paths arranged in the flow direction of the refrigerant.

In order to form the above-described flow of the refrigerant, a bypass pipe 31 is provided for the left header tank 30. An upstream end (one end portion) of the bypass pipe 31 is connected to the left-side first space S13 of the left header tank 30, and a downstream end (other end portion) of the bypass pipe 30 is connected to the left-side fourth space S43 of the left header tank 30. It is thus possible to make the refrigerant that has flowed into the left-side first space S13 bypass the second path PS2 and flow into the left-side fourth space S43.

According to the fourth embodiment, the four batteries B1, B2a, B2b, and B2c can be cooled by the eight tubes A1 to A8.

### (Fifth Embodiment)

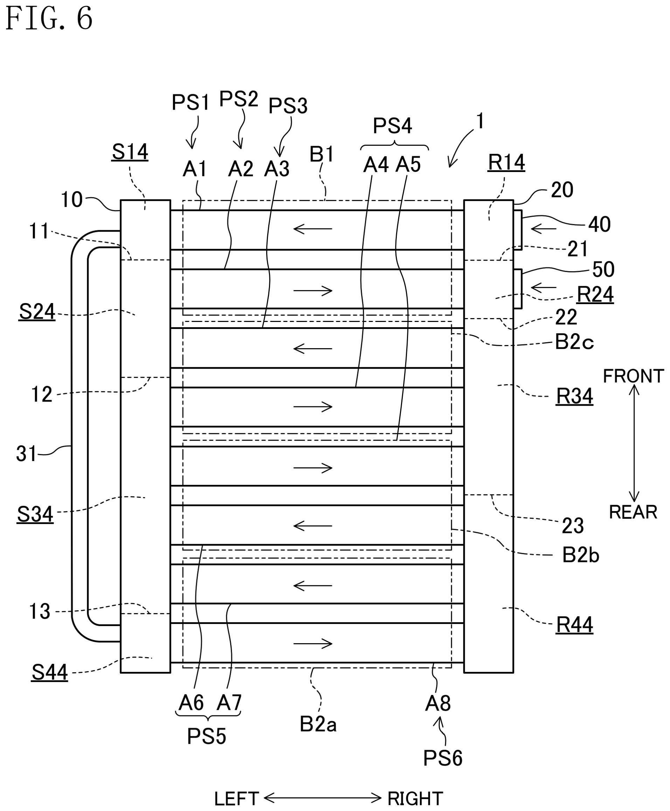

FIG. 6 is a diagram showing a battery cooler 1 according to a fifth embodiment of the present invention. The battery cooler 1 of the fifth embodiment differs from that of the fourth embodiment in the positions of the partition plates, and hence the configuration of the paths. In the following description, parts different from the fourth embodiment will be described in detail.

That is, the third left partition plate 13 is located between the seventh tube A7 and the eighth tube A8. Thus, the left header tank 10 has therein a left-side first space S14 in front of the first left partition plate 11, a left-side second space S24 between the first left partition plate 11 and the second left partition plate 12, a left-side third space S34 between the second left partition plate 12 and the third left partition plate 13, and a left-side fourth space S44 behind the third left partition plate 13.

The third right partition plate 23 is located between the fifth tube A5 and the sixth tube A6. Thus, the right header tank 20 has therein a right-side first space R14 in front of the first right partition plate 21, a right-side second space R24 between the first right partition plate 21 and the second right partition plate 22, a right-side third space R34 between the second right partition plate 22 and the third right partition plate 23, and a right-side fourth space R44 behind the third right partition plate 23.

First to sixth paths PS1 to PS6 are formed in the fifth embodiment. The first path PS1 is constituted by the first tube A1. The second path PS2 is constituted by the second tube A2. The third path PS3 is constituted by the third tube A3. The fourth path PS4 is constituted by the fourth tube A4 and the fifth tube A5. The fifth path PS5 is constituted by the sixth tube A6 and the seventh tube A7. The sixth path PS6 is constituted by the eighth tube A8.

The most upstream path in the flow direction of the refrigerant is the first path PS1. The most downstream path in the flow direction of the refrigerant is the second path PS2. The first path PS1 and the second path PS2 are arranged so as to be next to each other and come into contact with the first battery B1.

The third path PS3, the fourth path PS4, the fifth path PS5, and the sixth path PS6 are intermediate paths between the most upstream path and the most downstream path in the flow direction of the refrigerant. The third path PS3 and the fourth path PS4 are arranged so as to be next to each other and come into contact with the second battery B2c. The fourth path PS4 and the fifth path PS5 are arranged so as to be next to each other and come into contact with the second battery B2b. The fifth path PS5 and the sixth path PS6 are arranged so as to be next to each other and come into contact with the second battery B2a. The third path PS3, the fourth path PS4, the fifth path PS5, and the sixth path PS6 constitute a plurality of intermediate paths arranged in the flow direction of the refrigerant.

In order to form the above-described flow of the refrigerant, a bypass pipe 31 is provided for the left header tank 30. An upstream end (one end portion) of the bypass pipe 31 is connected to the left-side first space S14 of the left header tank 30, and a downstream end (other end portion) of the bypass pipe 30 is connected to the left-side fourth space S44 of the left header tank 30. It is thus possible to make the refrigerant that has flowed into the left-side first space S14 bypass the second path PS2, the third path PS3, the fourth path PS4, and the fifth path PS5 and flow into the left-side fourth space S44.

According to the fifth embodiment, the four batteries B1, B2a, B2b, and B2c can be cooled by the six paths PS1 to PS6. Further, the number of paths on the downstream side is set to two, thereby making it possible to reduce the pressure loss in the tubes.

The above-described embodiments are merely examples in all respects and should not be construed in a limited manner. Further,modifications and changes can be part of the invention provided they are within the scope of the appended claims.

### INDUSTRIAL APPLICABILITY

As can be seen from the foregoing description, the battery cooler according to the present invention can be used, for example, in an electric vehicle, a hybrid vehicle, or the like.

### DESCRIPTION OF REFERENCE CHARACTERS

1 Battery Cooler
10 Left Header Tank (First Header Tank)
11, 12, 13 First to Third Left Partition Plates
20 Right Header Tank (Second Header Tank)
21, 22, 23 First to Third Right Partition Plates
30, 31 Bypass Pipe
A1 to A8 First to Eighth Tubes
B1 First Battery
B2 Second Battery
PS1 to PS6 First to Sixth Paths

## Claims

1. A vehicle battery cooling system (100) comprising: a first battery (B1) and a second battery B2); and a vehicle battery cooler (1) comprising: a first header tank (10) connected to one end portions of three or more tubes (AI to A8) arranged in a predetermined direction, the first header tank (10) extending in the predetermined direction; and a second header tank (20) connected to other end portions of the tubes (A1 to A8), the second header tank (20) extending in the predetermined direction, the vehicle battery cooler (1) being configured to cool the first battery (B1) and the second battery (B2) separated from each other, by a cooling medium flowing through the tubes (A1 to A8), wherein one of the first header tank (10) or the second header tank (20) is provided with a refrigerant inflow part (40) that allows a refrigerant as the cooling medium to flow in, one of the first header tank (10) or the second header tank (20) is provided with a refrigerant outflow part (50) that allows the refrigerant that has flowed in from the refrigerant inflow part (40) and flowed through a most upstream path, an intermediate path, and a most downstream path to flow out, the most upstream path and the most downstream path are arranged in positions next to each other, the first header tank (10) and the second header tank (20) are provided with partition plates (11, 12, 13; 21, 22, 23) that partition inside of the first header tank (10) into a plurality of spaces (S1, S2, S3) and inside of the second header tank (20) into a plurality of spaces (R1, R2) to divide the tubes (A1 to A8) into three or more paths (PS1 to PS6) arranged in the predetermined direction, among the paths (PS1 to PS6), the most upstream path located at a most upstream position in a flow direction of the cooling medium and the most downstream path located at a most downstream position in the flow direction of the cooling medium are arranged so as to be next to each other and come into contact with the first battery (B1), among the paths (PS1 to PS6), the intermediate path between the most upstream path and the most downstream path in the flow direction of the cooling medium is arranged so as to come into contact with the second battery (B2), a tube (A1 to A8) of the most upstream path is the nearest to the front, the first header tank (10) is provided with a bypass pipe (30, 31) that allows the refrigerant that has flowed through the most upstream path to bypass the most downstream path and flow into the intermediate path, and an upstream end of the bypass pipe (30, 31) is connected to a space of the first header tank (10) corresponding to the most upstream path, and a downstream end of the bypass pipe (30, 31) is connected to a space of the first header tank (10) corresponding to the intermediate path.

2. The vehicle battery cooling system (100) of claim 1, wherein the most upstream path, the most downstream path, and the intermediate path are arranged in sequence in the predetermined direction.

3. The vehicle battery cooling system (100) of claim 1, wherein all the tubes (A1 to A8) have a same shape.

4. The vehicle battery cooling system (100) of claim 1, wherein the refrigerant at the refrigerant outflow part is in a superheated state.

5. The vehicle battery cooling system (100) of claim 1, wherein each of the paths (PS1 to PS6) is constituted by a same number of the tubes (AI to A8).

6. The vehicle battery cooling system (100) of claim 2, wherein the second header tank (20) is provided with a refrigerant inflow part that allows a refrigerant as the cooling medium to flow in, and a refrigerant outflow part that allows the refrigerant that has flowed in from the refrigerant inflow part and flowed through the most upstream path, the intermediate path, and the most downstream path to flow out.

7. The vehicle battery cooling system (100) of claim 1, wherein the most upstream path and the most downstream path are each constituted by n × 1 of the tubes (A1 to A8), and the intermediate path is constituted by n × 2 of the tubes, where n is a natural number starting from 1.

8. The vehicle battery cooling system (100) of claim 1, wherein the most upstream path and the most downstream path are each constituted by n × 1 of the tubes, and the intermediate path includes both of a path constituted by n × 1 of the tubes and a path constituted by n × 2 of the tubes, where n is a natural number starting from 1.

9. The vehicle battery cooling system (100) of claim 1, wherein the intermediate path includes a first intermediate path and a second intermediate path arranged in the flow direction of the cooling medium.

## Patentansprüche

1. Fahrzeugbatteriekühlsystem (100), umfassend: eine erste Batterie (B1) und eine zweite Batterie B2); und einen Fahrzeugbatteriekühler (1), umfassend: einen ersten Ausgleichsbehälter (10), der mit einem Endabschnitt von drei oder mehr Rohren (Al bis A8) verbunden ist, die in einer vorbestimmten Richtung angeordnet sind, wobei sich der erste Ausgleichsbehälter (10) in der vorbestimmten Richtung erstreckt; und einen zweiten Ausgleichsbehälter (20), der mit anderen Endabschnitten der Rohre (A1 bis A8) verbunden ist, wobei sich der zweite Ausgleichsbehälter (20) in die vorbestimmte Richtung erstreckt, wobei der Fahrzeugbatteriekühler (1) konfiguriert ist, um die erste Batterie (B1) und die zweite Batterie (B2) getrennt voneinander durch ein durch die Rohre (A1 bis A8) fließendes Kühlmedium zu kühlen, wobei einer von dem ersten Ausgleichsbehälter (10) oder dem zweiten Ausgleichsbehälter (20) mit einem Kältemittelzuflussteil (40) bereitgestellt ist, der es einem Kältemittel ermöglicht, als Kühlmedium einzuströmen, wobei einer von dem ersten Ausgleichsbehälter (10) oder dem zweiten Ausgleichsbehälter (20) mit einem Kältemittelabflussteil (50) bereitgestellt ist, der es dem Kältemittel, das aus dem Kältemittelzuflussteil (40) eingeströmt ist, und durch einen stromaufwärtigsten Pfad, einen Zwischenpfad und einen stromabwärtigsten Pfad geströmt ist, ermöglicht, auszuströmen, wobei der stromaufwärtigste Pfad und der stromabwärtigste Pfad in Positionen nebeneinander angeordnet sind, wobei der erste Ausgleichsbehälter (10) und der zweite Ausgleichsbehälter (20) mit Trennplatten (11, 12, 13; 21, 22, 23), die das Innere des ersten Ausgleichsbehälters (10) in eine Vielzahl von Räumen (S1, S2, S3) trennen, und das Innere des zweiten Ausgleichsbehälterss (20) in eine Vielzahl von Räumen (R1, R2) trennen, bereitgestellt sind, um die Rohre (A1 bis A8) in drei oder mehr in der vorbestimmten Richtung angeordnete Pfade (PS1 bis PS6) unter den Pfaden (PS1 bis PS6) zu unterteilen, wobei der stromaufwärtigste Pfad, der sich in einer stromaufwärtigsten Position in einer Strömungsrichtung des Kühlmediums befindet, und der stromabwärtigste Pfad, der sich in einer stromabwärtigsten Position in der Strömungsrichtung des Kühlmediums befindet, angeordnet sind, um nebeneinander zu liegen, um mit der ersten Batterie (B1) in Kontakt zu kommen, unter den Pfaden (PS1 bis PS6), der Zwischenpfad zwischen dem stromaufwärtigsten Pfad und dem stromabwärtigsten Pfad in der Strömungsrichtung des Kühlmediums angeordnet ist, um mit der zweiten Batterie (B2) in Kontakt zu kommen, ein Rohr (A1 bis A8) des stromaufwärtigsten Pfads der Vorderseite am nächsten liegt, der erste Ausgleichsbehälter (10) mit einem Bypassrohr (30, 31) bereitgestellt ist, das es dem Kältemittel, das durch den stromabwärtigsten Pfad geströmt ist, ermöglicht, den stromabwärtigsten Pfad zu umgehen und in den Zwischenpfad zu strömen, und ein stromaufwärtiges Ende des Bypassrohres (30, 31) mit einem Raum des ersten Ausgleichsbehälters (10) verbunden ist, der dem stromaufwärtigsten Pfad entspricht, und ein stromabwärtiges Ende des Bypassrohres (30, 31) mit einem Raum des ersten Ausgleichsbehälters (10) verbunden ist, der dem Zwischenpfad entspricht.

2. Fahrzeugbatteriekühlsystem (100) nach Anspruch 1, wobei der stromaufwärtigste Pfad, der stromabwärtigste Pfad und der Zwischenpfad nacheinander in der vorbestimmten Richtung angeordnet sind.

3. Fahrzeugbatteriekühlsystem (100) nach Anspruch 1, wobei alle Rohre (A1 bis A8) eine gleiche Form aufweisen.

4. Fahrzeugbatteriekühlsystem (100) nach Anspruch 1, wobei sich das Kältemittel am Kältemittelabflussteil in einem überhitzten Zustand befindet.

5. Fahrzeugbatteriekühlsystem (100) nach Anspruch 1, wobei jeder der Pfade (PS1 bis PS6) aus einer gleichen Anzahl der Rohre (Al bis A8) besteht.

6. Fahrzeugbatteriekühlsystem (100) nach Anspruch 2, wobei der zweite Ausgleichsbehälter (20) mit einem Kältemittelzuflussteil, der es einem Kältemittel ermöglicht, als Kühlmedium einzuströmen, und einem Kältemittelabflussteil bereitgestellt ist, der es dem Kältemittel, das aus dem Kältemittelzuflussteil einströmt und durch den stromaufwärtigsten Pfad, den Zwischenpfad und den stromabwärtigsten Pfad geströmt ist, auszuströmen.

7. Fahrzeugbatteriekühlsystem (100) nach Anspruch 1, wobei der stromaufwärtigste Pfad und der stromabwärtigste Pfad jeweils aus n x 1 der Rohre (A1 bis A8) bestehen, und der Zwischenpfad aus n x 2 der Rohre besteht, wobei n eine natürliche Zahl ist, die mit 1 beginnt.

8. Fahrzeugbatteriekühlsystem (100) nach Anspruch 1, wobei der stromaufwärtigste Pfad und der stromabwärtigste Pfad jeweils aus n x 1 der Rohre bestehen, und der Zwischenpfad beide, einen Pfad umfasst, der aus n x 1 der Rohre besteht, und einen Pfad, der aus n x 2 der Rohre besteht, beinhaltet, wobei n eine natürliche Zahl ist, die mit 1 beginnt.

9. Fahrzeugbatteriekühlsystem (100) nach Anspruch 1, wobei der Zwischenpfad einen ersten Zwischenpfad und einen zweiten Zwischenpfad beinhaltet, der in Strömungsrichtung des Kühlmediums angeordnet ist.

## Revendications

1. Système de refroidissement de batterie de véhicule (100) comprenant : une première batterie (B1) et une seconde batterie (B2) ; et un refroidisseur de batterie de véhicule (1) comprenant : un premier réservoir collecteur (10) relié à des parties d'extrémité de trois tubes ou plus (A1 à A8) agencés dans une direction prédéterminée, le premier réservoir collecteur (10) s'étendant dans la direction prédéterminée ; et un second réservoir collecteur (20) relié à d'autres parties d'extrémité des tubes (A1 à A8), le second réservoir collecteur (20) s'étendant dans la direction prédéterminée, le refroidisseur de batterie de véhicule (1) étant configuré pour refroidir la première batterie (B1) et la seconde batterie (B2) séparées l'une de l'autre, par un fluide de refroidissement s'écoulant à travers les tubes (A1 à A8), où l'un du premier réservoir collecteur (10) ou du second réservoir collecteur (20) est muni d'une partie d'entrée de fluide frigorigène (40) qui permet à un fluide frigorigène, comme étant le fluide de refroidissement, d'entrer, l'un du premier réservoir collecteur (10) ou du second réservoir collecteur (20) est muni d'une partie de sortie de fluide frigorigène (50) qui permet au fluide frigorigène qui est entré par la partie d'entrée de fluide frigorigène (40) et écoulé à travers le trajet le plus en amont, un trajet intermédiaire et le trajet le plus en aval, de sortir, le trajet le plus en amont et le trajet le plus en aval sont agencés dans des positions côte à côte, le premier réservoir collecteur (10) et le second réservoir collecteur (20) sont munis de plaques de séparation (11, 12, 13 ; 21, 22, 23) qui séparent l'intérieur du premier réservoir collecteur (10) en une pluralité d'espaces (S1, S2, S3) et l'intérieur du second réservoir collecteur (20) en une pluralité d'espaces (R1, R2) afin de diviser les tubes (A1 à A8) en trois trajets ou plus (PS1 à PS6) agencés dans la direction prédéterminée, parmi les trajets (PS1 à PS6), le trajet le plus en amont situé à la position la plus en amont dans une direction d'écoulement du fluide de refroidissement et le trajet le plus en aval situé à la position la plus en aval dans la direction d'écoulement du fluide de refroidissement sont agencés de manière à être côte à côte et à entrer en contact avec la première batterie (B1), parmi les trajets (PS1 à PS6), le trajet intermédiaire entre le trajet le plus en amont et le trajet le plus en aval dans la direction d'écoulement du fluide de refroidissement est agencé de manière à entrer en contact avec la seconde batterie (B2), un tube (A1 à A8) du trajet le plus en amont est le plus proche de l'avant, le premier réservoir collecteur (10) étant muni d'un tuyau de dérivation (30, 31) qui permet au fluide frigorigène qui s'est écoulé à travers le trajet le plus en amont de contourner le trajet le plus en aval et de s'écouler dans le trajet intermédiaire, et une extrémité amont du tuyau de dérivation (30, 31) est reliée à un espace du premier réservoir collecteur (10) correspondant au trajet le plus en amont, et une extrémité aval du tuyau de dérivation (30, 31) est reliée à un espace du premier réservoir collecteur (10) correspondant au trajet intermédiaire.

2. Système de refroidissement de batterie de véhicule (100) selon la revendication 1, dans lequel le trajet le plus en amont, le trajet le plus en aval et le trajet intermédiaire sont agencés en séquence dans la direction prédéterminée.

3. Système de refroidissement de batterie de véhicule (100) selon la revendication 1, dans lequel tous les tubes (A1 à A8) ont une même forme.

4. Système de refroidissement de batterie de véhicule (100) selon la revendication 1, dans lequel le fluide frigorigène au niveau de la partie de sortie de fluide frigorigène est dans un état surchauffé.

5. Système de refroidissement de batterie de véhicule (100) selon la revendication 1, dans lequel chacun des trajets (PS1 à PS6) est constitué d'un même nombre de tubes (A1 à A8).

6. Système de refroidissement de batterie de véhicule (100) selon la revendication 2, dans lequel le second réservoir collecteur (20) est muni d'une partie d'entrée de fluide frigorigène qui permet à un fluide frigorigène, comme étant le fluide de refroidissement, d'entrer, et d'une partie de sortie de fluide frigorigène qui permet au fluide frigorigène qui est entré par la partie d'entrée de fluide frigorigène et écoulé à travers le trajet le plus en amont, le trajet intermédiaire et le trajet le plus en aval, de sortir.

7. Système de refroidissement de batterie de véhicule (100) selon la revendication 1, dans lequel le trajet le plus en amont et le trajet le plus en aval sont chacun constitués de n × 1 tubes (A1 à A8), et le trajet intermédiaire est constitué de n × 2 tubes, où n est un nombre naturel à partir de 1.

8. Système de refroidissement de batterie de véhicule (100) selon la revendication 1, dans lequel le trajet le plus en amont et le trajet le plus en aval sont chacun constitués de n × 1 tubes, et le trajet intermédiaire comprend à la fois un trajet constitué de n × 1 tubes et un trajet constitué de n × 2 tubes, où n est un nombre naturel à partir de 1.

9. Système de refroidissement de batterie de véhicule (100) selon la revendication 1, dans lequel le trajet intermédiaire comprend un premier trajet intermédiaire et un second trajet intermédiaire agencés dans la direction d'écoulement du fluide de refroidissement.
